Europäisches Patentamt

(19) **European Patent Office**

**Office européen des brevets**

(11) Numéro de publication : **0 124 673**
**B1**

(12) **FASCICULE DE BREVET EUROPÉEN**

(45) Date de publication du fascicule du brevet :
29.07.87

(51) Int. Cl.⁴ : **B 65 G 47/91**, B 66 C 1/02

(21) Numéro de dépôt : **83400911.0**

(22) Date de dépôt : **05.05.83**

(54) Dispositif de préhension de colis.

(43) Date de publication de la demande :
**14.11.84 Bulletin 84/46**

(45) Mention de la délivrance du brevet :
**29.07.87 Bulletin 87/31**

(84) Etats contractants désignés :
**AT BE CH DE FR GB IT LI LU NL SE**

(56) Documents cités :
DE-A- 2 440 691
DE-B- 1 196 336
DE-B- 1 293 995
DE-U- 1 850 562
FR-A- 1 533 856
FR-A- 2 252 969
GB-A- 1 068 514
GB-A- 2 074 127

(73) Titulaire : **ISOVER SAINT-GOBAIN**
**Les Miroirs 18, avenue d'Alsace**
**F-92400 Courbevoie (FR)**

(72) Inventeur : **Bancon, Georges**
**25 boulevard Joffre**
**F-54000 Nancy (FR)**
Inventeur : **Potters, Michel**
**Jacob Catslaan 10**
**NL-4873 GT Etten-Leur (NL)**

(74) Mandataire : **Le Vaguerese, Sylvain Jacques et al**
**SAINT-GOBAIN RECHERCHE 39, quai Lucien Lefranc**
**F-93304 Aubervilliers Cedex (FR)**

## Description

L'invention est relative à un dispositif de préhension de colis dont les caractéristiques rendent leur manutention mal aisée par les moyens traditionnels.

De façon plus précise l'invention vise la manutention de colis dont la forme est facilement modifiée notamment sous l'effet d'une pression mécanique, qui sont de grandes dimensions et sont relativement fragiles.

Les rouleaux ou paquets renfermant des matériaux fibreux sous forme de matelas souples constituent un exemple particulièrement représentatif du type de colis envisagés dans le cadre de l'invention. Pour des raisons de simplification nous nous référerons dans la suite de la description aux colis de matelas de laine de verre étant entendu que l'invention s'applique à tous les colis présentant des caractéristiques analogues, tant pour leur forme, que pour leur consistance.

La manutention des colis de produits tels que les matelas de laine de verre soulève des difficultés très particulières qui tiennent à la fois aux dimensions de ces colis, à leur fragilité, à leur capacité à se déformer.

Dans les présentations les plus usuelles les matelas de fibres isolantes atteignent ou même dépassent 1,20 m de large et sont par exemple en rouleaux de 0,60 m de diamètre, ou également par exemple, en ensembles de panneaux formant un colis parallélépipédique d'une longueur de 1,20 m et dont les côtés font 0,6 sur 0,6 m. Il s'agit donc de colis relativement encombrants. Par ailleurs leur masse volumique est peu élevée. Elle se situe aux environs de 15 à 100 kg/m³, soit une masse pour un rouleau du type indiqué précédemment de l'ordre de 8 à 30 kg.

Les colis en question se distinguent encore par le fait que leur emballage est relativement fragile.

Les emballages sont constitués ordinairement d'une feuille d'un matériau macromoléculaire éventuellement rétracté, tel que des feuilles de polychlorure de vinyle, polyéthylène, polypropylène, ou de matériaux analogues, ou des feuilles de papier de plus ou moins grande résistance.

Ces emballages légers présentent l'avantage d'être relativement peu coûteux. En contrepartie ils ne protègent le produit que de façon très sommaire contre les déformations ou déchirures qui peuvent résulter d'une manutention mal adaptée et de ce fait contribuent aux formes géométriques mal définies et arrondies des colis.

Si tout au long des chaînes de production de ces produits à base de fibres de verre on s'efforce de réaliser une continuité de traitement depuis le fibrage jusqu'à l'emballage, ce qui évite les opérations de transferts, une intervention est cependant nécessaire en bout de chaîne pour rassembler les produits emballés et les conduire, ordinairement sur des palettes ou des chariots, dans des locaux de stockage.

La mise en palette est délicate à réaliser par des moyens de préhension traditionnels tels que des crochets, des pinces, etc... en raison de la fragilité des emballages au poinçonnement et de la faible résistance à l'écrasement des produits. Pour cette raison le remplissage des palettes est souvent accompli de façon purement manuelle ce qui n'est ni satisfaisant ni très rationnel.

Un but de l'invention est de permettre la manutention mécanique de colis tels que les rouleaux de laine de verre ou de produits analogues sans risque de détérioration de ces colis.

Un autre but de l'invention est de permettre une manutention suivant des cadences accélérées par rapport à celles mises en œuvre jusqu'à ce jour.

Un autre but de l'invention est de permettre la manutention simultanée de plusieurs colis à prendre ou à déposer en des endroits différents.

Un autre but de l'invention est de permettre la manutention de colis de formes et/ou de dimensions variées avec le même dispositif.

Selon l'invention pour la manutention, le ou les colis sont saisis au moyen d'un dispositif opérant par dépression pneumatique exercée sur une fraction de la surface du colis.

De façon plus précise, selon l'invention, le dispositif de préhension de colis déformables, de faible masse volumique et recouverts d'une mince enveloppe, comprend, associé à des moyens de manutention un ensemble de moyens permettant d'appliquer une dépression pneumatique, par l'intermédiaire d'au moins un élément de préhension, au contact de l'enveloppe des colis, l'élément de préhension étant monté sur un châssis, lui-même fixé sur les moyens de manutention. (Dispositif connu de GB-A-2 074 127), et, selon l'invention, ce dispositif est caractérisé par le fait que l'élément de préhension est monté sur le châssis par une articulation rotule et que des moyens permettent au cours des opérations, l'immobilisation de la rotule et par suite celle de l'organe de préhension dans une position déterminée par rapport au châssis, ces moyens étant associés à la rotule de la façon suivante : la rotule comporte un logement associé à un élément mobile par rapport au châssis et de même forme que le logement, l'introduction de cet élément mobile dans le logement immobilisant la rotule.

Il est connu de saisir des objets par des moyens pneumatiques. Le document GB-A-2 074 127 présente ainsi des moyens pour la manutention d'objets de forme variable dont l'organe de préhension, pour épouser la forme de ces objets, est lui-même constitué d'un matériau facilement déformable.

Il est connu par ailleurs du document GB-A-1 068 514 un organe de préhension pneumatique dont la mobilité est assurée par une articulation de type rotule.

Vis-à-vis de ces documents antérieurs, l'invention permet à la fois de réaliser une saisie convenable de colis déformables et d'ajuster la position des colis ainsi saisis pour faciliter et améliorer leur arrangement ultérieur.

La surface sur laquelle elle s'exerce et la dépression appliquée sont déterminées conjointement de façon que d'une part la force soit suffisante pour déplacer le colis et que d'autre part la dépression reste inférieure à celle pour laquelle l'enveloppe du colis risquerait d'être endommagée.

Compte tenu de leur faible masse, la dépression nécessaire dans le dispositif, qui agit à la façon d'une ventouse, n'est pas très importante et d'autant moins que la surface utile, c'est-à-dire celle sur laquelle s'exerce la dépression, est plus grande. De cette façon il est possible de soulever et de déplacer les colis retenus sur la tête de préhension en restant très en deçà des valeurs de dépression susceptibles d'aboutir à l'éclatement ou à la déchirure de l'emballage.

A titre d'exemple pour un papier Kraft d'emballage en feuille de 70 g/m² la résistance à l'éclatement (NF Q 03053) est de 36 Mullen et la porosité de 3,5 selon la NF T Q 03001. Si l'on opère avec une tête de préhension de 25 dm² la masse maximum qui pourra théoriquement être maintenue est de 500 kg. En pratique compte tenu de la marge de sécurité nécessaire une masse inférieure à 80 kg peut être déplacée sans risque de rupture de l'enveloppe. Ceci, notons-le, est bien supérieur à la masse habituelle d'un rouleau de laine de verre qui est de façon typique de l'ordre de 10 à 30 kg. Cette marge n'est pas entièrement superflue. En effet l'étanchéité au niveau du colis n'est jamais assurée de façon parfaite. Une dépression statique plus forte permet de compenser ces défauts d'étanchéité en régime dynamique.

Ce que nous venons de voir pour le papier d'emballage est également applicable au cas d'un emballage sous feuille de matériau macromoléculaire. Ainsi une feuille de polyéthylène d'une épaisseur de 0,07 mm peut supporter sans déchirement ni déformation substantielle une dépression de l'ordre de 300 mbar.

En fonction de ce qui précède, le technicien détermine dans chaque cas, c'est-à-dire pour chaque type de colis manutentionné, en fonction du poids du colis et de la résistance de l'emballage la « surface de préhension » nécessaire. La surface une fois déterminée celle-ci peut être constituée à l'aide d'une ventouse unique ou de plusieurs ventouses de dimensions moindres et réparties à différents points de la surface du colis.

La forme de la surface de préhension peut évidemment être très variée sans que le fonctionnement en soit changé.

De façon générale le dispositif selon l'invention constitue une tête de préhension comprenant une chambre de dépression dont la forme générale est adaptée au colis. Cette chambre est délimitée latéralement par des lèvres disposées sur le pourtour de la tête de préhension.

Les lèvres sont directement en contact avec l'enveloppe externe du colis et avec ce dernier assurent l'étanchéité de la chambre. Leur forme est donc adaptée à la forme et à la nature du colis pour que cette étanchéité soit réalisée de façon satisfaisante.

Les colis de matelas de fibres enveloppés dans un emballage souple peuvent se déformer pour épouser la configuration exacte du bord des lèvres. Dans ce cas il n'est pas indispensable que celles-ci puissent se déformer notablement.

Par contre, toujours dans ce cas, il paraît préférable que la surface de contact de la lèvre avec l'enveloppe du colis soit relativement large. Le contact d'une lèvre trop mince avec l'enveloppe fragile pourrait amener des déformations ou des déchirures indésirables.

Pour les colis déformables il n'est même pas indispensable que le contour des lèvres corresponde à celui de la surface du colis sur lequel elles viennent s'appliquer. Ainsi pour des rouleaux cylindriques il est possible d'utiliser des lèvres longitudinales et transversales rectilignes. Dans le sens transversal la convexité du rouleau dans ce cas, est compensée par un léger tassement pour amener la lèvre sur toute sa longueur au contact de l'enveloppe.

Divers détails de réalisation de l'invention apparaîtront dans la suite de la description. Dans celle-ci il est fait référence aux planches de dessins dans lesquelles :

la figure 1   est un schéma d'une installation de transfert de colis de l'extrémité d'une chaîne de conditionnement sur une palette au moyen d'un bras articulé.

la figure 2   représente en coupe longitudinale partielle un dispositif de préhension selon l'invention,

la figure 3   est une vue transversale partiellement en coupe du même dispositif.

la figure 4   montre un assemblage préféré pour la fixation des lèvres du dispositif de préhension.

la figure 5   représente en perspective un autre ensemble comprenant trois organes de préhension.

Les dispositifs de préhension peuvent être fixés sur n'importe quel ensemble de levage et de transport. Il peut s'agir notamment de bras articulés, de ponts mobiles, de palonniers ou de combinaisons d'appareils de ce type.

Dans la suite l'invention est décrite dans une application particulière, la palettisation de rouleaux de laine de verre venant directement de la chaîne de fabrication et de conditionnement.

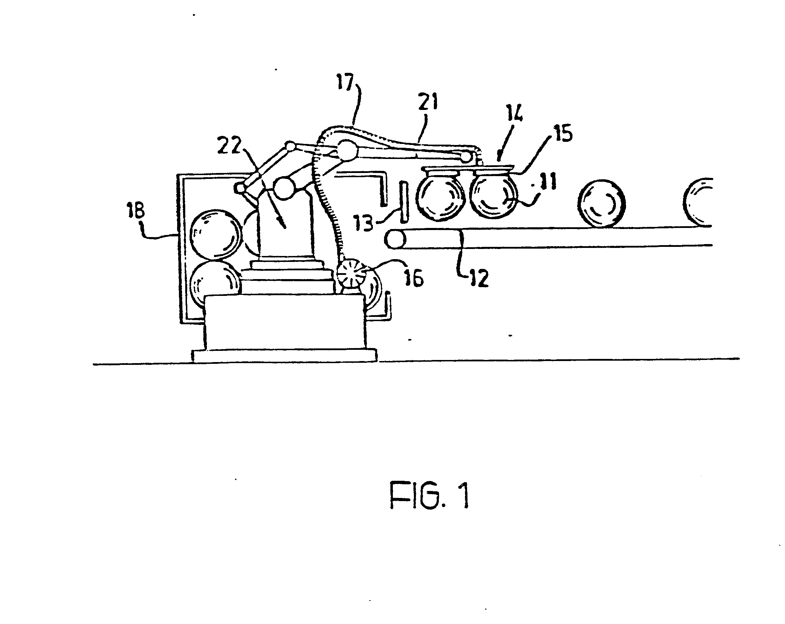

A la figure 1, les rouleaux 11 de laine de verre enveloppés dans une feuille de polyéthylène (0,07 mm) sont acheminés sur le tapis convoyeur 12.

Ces rouleaux ont un diamètre de 55 cm pour une longueur de 120 cm et un poids de 10 kg.

A l'extrémité du tapis convoyeur 12 les rouleaux sont arrêtés par la butée 13.

Un dispositif de préhension 14 comportant deux éléments d'aspiration 15 est fixé sur un dispositif de levage articulé 22.

Chaque organe de préhension est de forme rectangulaire (100 × 25 cm).

Une pompe 16 est associée au dispositif de levage. Cette pompe est capable d'évacuer 5 m³/minute sous une dépression de 200 mbar ou 10 m³/minute sous 30 mbar.

Même dans les plus mauvaises conditions la masse soulevable pour chaque élément 15 est donc d'au moins 75 kg, c'est-à-dire une masse sensiblement plus élevée que celle des rouleaux de laine de verre.

Cet excédent de puissance du dispositif est largement suffisant pour que, lors des mouvements du dispositif de levage, les accélérations communiquées aux rouleaux ne conduisent pas à leur « décrochement » accidentel.

Un tube annelé flexible 17 relie les éléments 15 à la pompe 16. Un clapet, non représenté, est situé à l'entrée des éléments 15. Il interrompt l'aspiration lorsque les rouleaux préalablement saisis sont relâchés sur le chariot 18 sur lequel les rouleaux sont emmagasinés. Un vérin pneumatique actionne le clapet.

Dans des opérations de manutention plus complexes une manœuvre séparée de chaque élément 15 peut être exécutée en commandant l'ouverture et la fermeture d'un clapet pour chacun des éléments 15.

Une séquence complète de transport comprend :

le positionnement du bras de levage 21 au-dessus des rouleaux 11 arrêtés par le butoir 13,

l'ouverture du clapet d'aspiration entraînant la saisie des deux rouleaux simultanément,

le relevage du bras 21 et son pivotement amenant les rouleaux à la verticale du chariot 18,

l'abaissement du bras 21 pour amener les rouleaux 11 sur le chariot (ou sur la rangée précédente de rouleaux),

la fermeture du clapet entraînant le lachâge des rouleaux.

Le dispositif de levage est entièrement automatisé. L'ensemble des mouvements pour le chargement d'un chariot est programmé.

Dans les conditions qui ont été indiquées précédemment le chargement des chariots peut se faire à une cadence allant jusqu'à 14 rouleaux par minute.

L'invention permet avantageusement un bon fonctionnement des systèmes de levage tels que celui décrit précédemment, même lorsque les colis à saisir se présentent dans des positions légèrement variables. Elle permet également de replacer les objets dans des positions régulières.

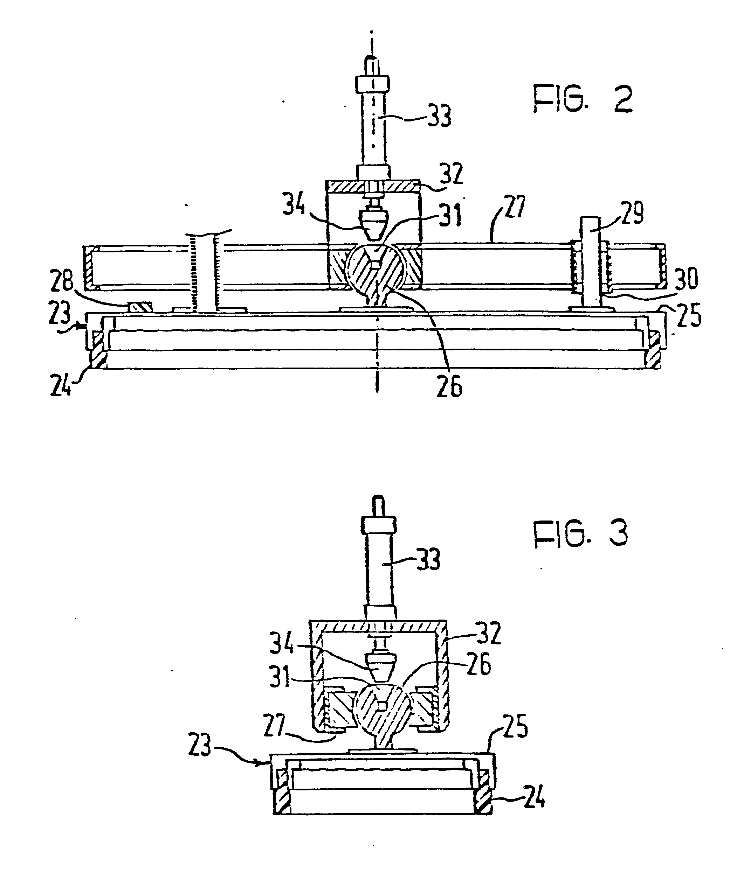

Le dispositif présenté aux figures 2 et 3 permet d'obtenir ces avantages.

Sur ces figures le dispositif comprend un seul élément de préhension 23. Des ensembles analogues comportant plusieurs de ces éléments sont bien entendu possibles, notamment pour la manutention de séries comprenant des colis extrêmement nombreux.

L'élément de préhension comprend comme pour les dispositifs précédents des lèvres épaisses 24 délimitant la chambre dans laquelle une dépression est établie lors de la saisie des colis.

Les lèvres 24 sont fixées à un bâti 25.

Le bâti 25 est fixé par une articulation rotule 26 sur un châssis 27. Les moyens de levage qui ne sont pas représentés sont fixés sur ce châssis.

La présence de la rotule permet l'inclinaison longitudinale et transversale de l'élément de préhension. De cette façon les défauts de position des rouleaux à saisir ne perturbent pas le fonctionnement.

Les débattements longitudinaux et transversaux sont limités par des tampons 28 en matériau élastique qui amortissent les chocs lorsque le bâti 25 vient en butée contre le châssis 27.

Un guide 29 est engagé dans un conduit 30 disposé sur le châssis 27. Les dimensions relatives du conduit 30 et du guide 29 sont telles qu'elles ne font pas obstacle aux mouvements de la rotule qui maintiennent le châssis 27 et le bâti 25 l'un vis à vis de l'autre. Ce montage s'oppose à la rotation du bâti 25 parallèlement au châssis 27.

Lorsque les rouleaux ont été saisis, il est avantageux de pouvoir les replacer dans une disposition régulière. Pour cela selon l'invention les dispositifs de préhension sont bloqués dans des positions bien définies.

Le blocage de l'organe de préhension qui correspond à l'immobilisation de la rotule 26 est obtenu de la façon représentée aux figures 2 et 3.

Sur ces figures, la rotule 26 présente un logement 31 de forme générale tronçonique.

Un support 32 est fixé sur le châssis 27 au niveau de la rotule 26. Sur ce support est disposé un vérin 33 dont l'axe passe par le centre de la rotule 26. A l'extrémité de la tige du vérin 33 faisant face à la rotule est fixé un élément 34 de forme tronçonique complémentaire de celle du logement 31.

Pendant la saisie des colis le vérin est rétracté dans la position représentée aux figures 2 et 3. La rotule peut se mouvoir librement pour s'adapter à la forme et à la position des colis. Le levage du colis étant effectué le vérin est actionné de façon que l'élément 34 vienne se placer dans le logement 31, immobilisant la rotule 26.

La position du colis au moment de son dépôt, par ce moyen peut être déterminée avec une certaine précision ce qui facilite les manutentions ultérieures.

Bien entendu le fonctionnement du vérin 33 peut être entièrement automatisé comme l'ensemble de la manœuvre.

Lorsque la manutention des colis est effectuée de manière automatique, il est avantageux de contrôler le bon fonctionnement de l'ensemble. En particulier il est souhaitable de vérifier que la saisie des colis est effectivement réalisée. L'absence d'un colis au cours d'une manœuvre entraînerait en effet une désorganisation dans leur rangement après dépôt.

Afin d'éviter ce genre d'inconvénient, il est avantageux selon l'invention de prévoir un détecteur permettant de vérifier qu'un colis est bien saisi par l'organe de préhension. Ce détecteur peut prendre des formes très variées, la plus simple étant constituée par un dispositif électrique du type interrupteur à contact enclenché par la pression du colis.

Pour que le contrôle soit efficace, il doit être opéré une fois le colis soulevé. Le contrôle peut être effectué sans interrompre le mouvement de l'ensemble de levage.

Par ailleurs, l'automatisation peut être établie de telle sorte que lorsque le contrôle montre que le colis n'a pas été saisi, le cycle est interrompu et l'opération de saisie est renouvelée.

Les dispositifs selon l'invention sont soumis normalement à un fonctionnement continu. Si les efforts supportés dans l'ensemble ne sont pas très importants, certains éléments sont cependant sujets à une usure relativement rapide. C'est le cas notamment des lèvres souples 24. Pour cette raison il est avantageux de prévoir un dispositif qui permette un remplacement commode de ces lèvres.

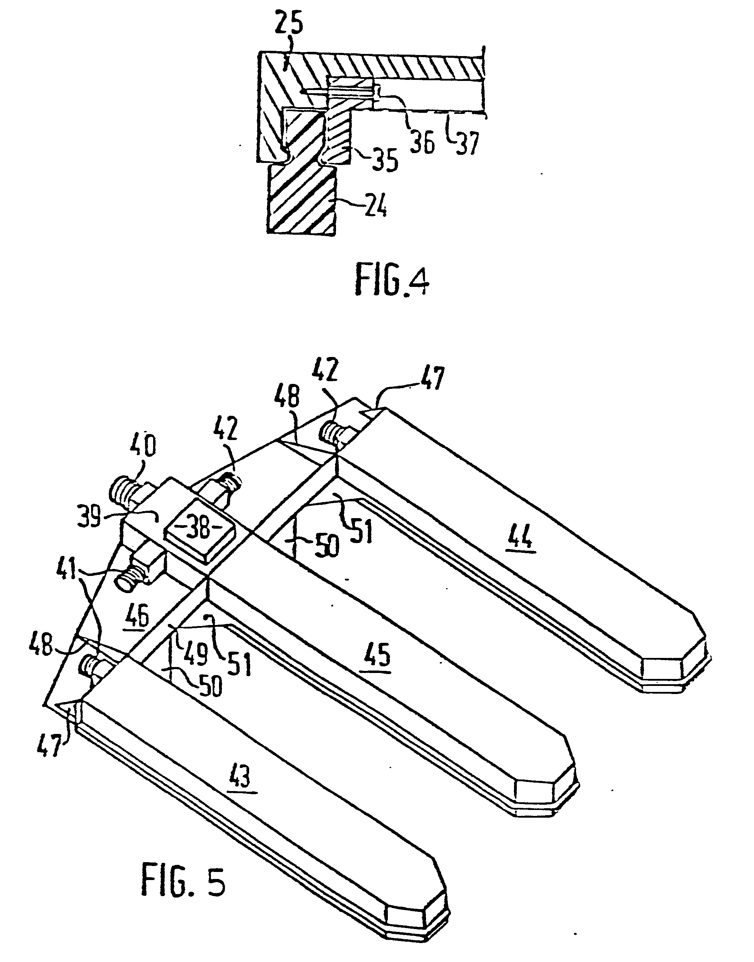

La figure 4 présente un assemblage permettant le remplacement des lèvres 24. Dans cet assemblage la lèvre 24 est maintenue entre le bâti 25 et l'élément 35 lequel est fixé sur le bâti par des vis 36.

L'élément 35 comme représenté peut éventuellement servir de support à une grille 37 dont nous avons vu précédemment la fonction. La grille 37 est fixée sur l'élément 35 par des moyens non représentés par exemple des vis.

La manutention des colis relativement légers comme ceux constitués par les rouleaux de laine de verre est avantageusement effectuée au moyen d'un dispositif de levage de faible puissance. Dans ce cas il est préférable de faire en sorte que l'organe de préhension soit lui-même aussi léger que possible. A cet effet, il est avantageux de réaliser les parties rigides de cet organe en un matériau synthétique armé, par exemple en polyépoxide ou polyester armé de fibres de verre, ou en un matériau analogue.

A titre d'exemple, un ensemble tel que représenté à la figure 5 constitué en polyester armé et comportant trois organes de préhension ne pèse que 8 kg.

La légèreté de l'ensemble de la figure 5 explique également qu'il soit possible de fixer le dispositif de levage de façon dissymétrique. La fixation se fait sur le socle 38. Cette disposition permet en outre un meilleur dégagement du poste sur lequel les rouleaux de laine de verre sont saisis. En effet, le bras de levage ne vient plus surplomber le convoyeur. Par suite le bras peut également être plus court et la puissance du dispositif de levage encore plus faible.

Dans l'ensemble représenté à la figure 5, l'aspiration se fait à partir d'une chambre 39 reliée à une pompe par la canalisation 40. Des canalisations 41 et 42, représentées en partie, relient la chambre 39 aux organes de préhension 43, 44 situés sur les côtés. La chambre 39 communique directement avec l'organe de préhension central 45.

Les organes 43, 44 et 45 sont rendus solidaires les uns des autres par le bâti 46 sur lequel est fixée la chambre 39. Des membrures 50 et 51 et des nervures 47, 48, 49 renforcent la rigidité du dispositif.

La forme des organes 43, 44 et 45 est choisie de préférence telle qu'ils puissent être fabriqués directement par moulage.

**Revendications**

1. Dispositif de préhension de colis déformables de faible masse volumique recouverts d'une mince enveloppe comprenant, associé à des moyens de manutention, un ensemble de moyens permettant d'appliquer une dépression pneumatique par l'intermédiaire d'au moins un élément de préhension (23) au contact de l'enveloppe des colis, l'élément de préhension (23) est monté sur un châssis (27), lui-même fixé sur les moyens de manutention, caractérisé en ce que l'élément de préhension (23) est monté sur le châssis (27) par une articulation rotule (26), et en ce que des moyens (31, 34) sont prévus pour permettre l'immobilisation de la rotule (26) et de l'élément de préhension (23) dans une position déterminée par rapport au châssis (27), la rotule (26) et lesdits moyens (31, 34) étant associés de telle façon que la rotule (26) comporte un logement (31) associé à un élément (34) mobile par rapport au châssis (27) et de même forme que le logement (31), l'introduction de cet élément mobile (34) dans le logement (31) immobilisant la rotule (26).

2. Dispositif selon la revendication 1 dans lequel les moyens de manutention, de même que ceux assurant la saisie et le relâchement des colis, sont associés à un ensemble de commande programmable.

3. Dispositif selon l'une des revendications 1 ou 2, caractérisé en ce que l'élément de préhension (23) comporte un système de détection permettant de contrôler que la saisie du colis est correctement effectuée.

4. Dispositif selon l'une des revendications 1 à 3, caractérisé en ce que l'élément de préhension (23) comprend au moins une chambre de dépression délimitée sur son pourtour par une lèvre (24) continue en matériau semi-rigide.

5. Dispositif selon l'une quelconque des revendications 1 à 4 dans lequel la lèvre (24) est amovible et est maintenue par serrage entre le châssis (27) de l'élément de préhension (23) et un élément de fixation (35).

6. Dispositif selon l'une quelconque des revendications précédentes dans lequel la dépression imposée est limitée à 200 mbar.

**Claims**

1. Apparatus for gripping deformable packages of small volumetric mass covered with a thin wrapping and comprising, associated with handling means, an assembly of means which make it possible to apply a pneumatic negative pressure through at least one gripping element (23) in contact with the wrapping of the packages, the gripping element (23) being mounted on a frame (27) which is itself fixed on handling means, characterised in that the gripping element (23) is mounted on the frame (27) via a ball and socket joint (26) and in that means (31, 34) are provided to allow immobilising of the ball and socket joint (26) and of the gripping element (23) in a specific position in relation to the frame (27), the ball and socket joint (26) and the said means (31, 34) being associated in such a way that the ball and socket joint (26) comprises a housing (31) associated with an element (34) mobile in relation to the frame (27) and of the same form as the housing (31), the introduction of said mobile element (34) into the housing (31) immobilising the ball and socket joint (26).

2. Apparatus according to Claim 1 in which the handling means, in the same way as those which provide for the gripping and releasing of the packages, are associated with a programmable control assembly.

3. Apparatus according to one of Claims 1 or 2, characterised in that the gripping element (23) comprises a detection system making it possible to monitor whether the gripping of the package has been properly effected.

4. Apparatus according to one of Claims 1 to 3, characterised in that the gripping element (23) comprises at least one negative pressure chamber bounded on its periphery by a continuous lip (24) of semi-rigid material.

5. Apparatus according to any one of Claims 1 to 4 in which the lip (24) is removable and is maintained by being gripped between the frame (27) and the gripping element (23) and a fixing element (35).

6. Apparatus according to any one of the preceding Claims in which the negative pressure applied is limited to 200 mbars.

**Patentansprüche**

1. Vorrichtung zum Greifen von verformbaren mit einer dünnen Umhüllung umgebenen Paketen geringer Rohdichte in Verbindung mit Transportmitteln, mit einer Einheit von Mitteln, die es ermöglichen, einen pneumatischen Sog über die Verbindung von mindestens einem Greifelement (23), welches in Berührung mit der Umhüllung der Pakete kommt, einzusetzen, wobei das Greifelement (23) an einem Rahmen (27) befestigt ist, der wiederum an den Transportmitteln fixiert ist, dadurch gekennzeichnet, daß das Greifelement (23) an dem Rahmen (27) durch ein Kugelgelenklager (26) befestigt ist und daß Mittel (31, 34) vorgesehen sind, um eine Arretierung des Kugelgelenks (26) des Greifelements (23) zu ermöglichen, und zwar in einer bestimmten Stellung in bezug auf den Rahmen (27), wobei das Kugelgelenk (26) und die Mittel (31, 34) in der Weise zueinander angepaßt sind, daß das Kugelgelenk (26) eine Ausnehmung (31) besitzt, welche in bezug auf den Rahmen (27) zu einem bewegbaren Element (34) angepaßt ist, das die gleiche Form wie die Ausnehmung (31) hat, wobei die Einführung dieses bewegbaren Elements (34) in die Ausnehmung (31) das Kugelgelenk (26) arretiert.

2. Vorrichtung nach Anspruch 1, bei welcher die Transportmittel sowie diejenigen Mittel, die das Aufnehmen und das Loslassen der Pakete besorgen mit einer programmierbaren Steuerungseinheit verbunden sind.

3. Vorrichtung nach einem der Ansprüche 1 oder 2, dadurch gekennzeichnet, daß das Greifelement (23) ein Kontrollsystem aufweist, welches überwacht ob des Aufnehmen der Pakete korrekt erfolgt ist.

4. Vorrichtung nach einem der Ansprüche 1 bis 3, dadurch gekennzeichnet, daß das Greifelement (23) mindestens eine Unterdruckkammer aufweist, die an ihrem Rand durch eine durchgehende, aus einem halbfesten Material bestehende Lippe (24) abgegrenzt ist.

5. Vorrichtung nach einem der Ansprüche 1 bis 4, bei welcher die Lippe (24) abnehmbar ist und durch ein Festklemmen zwischen dem Rahmen (27) des Greifelements (23) und einem Einspannelement (35) gehalten ist.

6. Vorrichtung nach irgendeinem der vorherigen Ansprüche, bei welcher der vorgesehene Unterdruck auf 200 mbar begrenzt ist.

FIG. 1

FIG. 2

FIG. 3

FIG.4

FIG. 5